# FASCICULE DE BREVET EUROPEEN

(11) **EP 0 998 383 B1**
(45) Date de publication et mention de la délivrance du brevet: **13.11.2002**
(21) Numéro de dépôt: 98939716.1
(22) Date de dépôt: 20.07.1998
(51) Int. Cl.: B29C 70/32, B29C 53/62, B29C 53/82, B29K 101/12

(54) **PROCEDE DE FABRICATION DE PIECES EN MATERIAU COMPOSITE A MATRICE THERMOPLASTIQUE**
VERFAHREN ZUR HERSTELLUNG VON VERBUNDGEGENSTÄNDEN MIT THERMOPLASTISCHER MATRIX
METHOD FOR MAKING PARTS IN COMPOSITE MATERIAL WITH THERMOPLASTIC MATRIX

(30) Priorité: 22.07.1997 FR 9709265
(43) Date de publication de la demande: 10.05.2000
(73) Titulaire: AEROSPATIALE Société Nationale Industrielle, 75781 Paris Cédex 16 (FR); EUROCOPTER, 13725 Marignane Cédex (FR); DASSAULT AVIATION, F-75008 Paris (FR)
(72) Inventeur: MAISON, Serge, F-75012 Paris (FR); MEUNIER, Serge, F-75014 Paris (FR); THIBOUT, Cédric, F-75004 Paris (FR); MOUTON, Luc, F-13127 Vitrolles (FR); PAYEN, Hervé, F-13880 Velaux (FR); VAUTEY, Philippe, F-92500 Rueil Malmaison (FR); COIFFIER-COLAS, Carole, F-92500 Rueil Malmaison (FR); DELBEZ, Joel, Résidence "Les Olympiades", F-33700 Mérignac (FR)
(74) Mandataire: Poulin, Gérard
(86) Numéro de dépôt international: FR9801584
(87) Numéro de publication internationale: WO99004952

(56) Documents cités:
- EP-A- 0 344 721
- EP-A- 0 444 627
- GB-A- 2 225 742
- US-A- 3 300 355
- US-A- 4 633 632
- US-A- 4 946 526
- US-A- 5 362 347

## Description

### Domaine technique

L'invention concerne un procédé permettant de fabriquer des pièces de grandes dimensions, incluant une peau et des éléments de renfort, en un matériau composite à matrice thermoplastique.

Le procédé selon l'invention peut être utilisé dans de nombreux secteurs industriels, dès lors que l'on souhaite pouvoir bénéficier des avantages propres aux matériaux composites pour la fabrication de pièces de grandes dimensions comprenant une peau et des éléments de renfort rapportés. Ainsi, dans l'industrie aéronautique, le procédé selon l'invention peut notamment être utilisé pour fabriquer des tronçons de fuselage d'aéronefs, des viroles de nacelles de réacteurs d'avions, etc..

### Etat de la technique

Lorsqu'on désire donner à une enveloppe mince, que l'on appellera "peau" dans la suite du texte, une bonne tenue mécanique sans accroître exagérément sa masse, il est d'usage de lui associer des éléments de renfort tels que des lisses, des cadres, des renforts locaux, etc. rapportés sur la peau.

Dans le passé, de telles structures étaient toujours entièrement métalliques, la peau se présentant sous la forme d'une tôle et les éléments de renfort sous la forme de tôles ou de profilés rapportés sur la peau par des moyens de fixation tels que des rivets. Les structures métalliques ainsi constituées sont encore très nombreuses, notamment lorsque les pièces sont de grandes dimensions. En particulier, dans le domaine aéronautique, les tronçons de fuselage des aéronefs ainsi que les viroles des nacelles entourant les réacteurs des avions sont toujours réalisés de cette manière, comme l'illustrent notamment les documents US-A-5 560 102 et US-A-5 586 381.

Depuis quelques années, une partie de plus en plus importante des pièces métalliques tend à être remplacée par des pièces en matériaux composites formées de fibres longues telles que des fibres de carbone, noyées dans une matrice de résine. Cette évolution s'explique par les avantages propres aux matériaux composites. Ces avantages comprennent notamment un gain de masse d'environ 25 % par rapport à des pièces métalliques comparables, ainsi que des propriétés mécaniques de même niveau que celles des pièces métalliques et susceptibles d'être adaptées à la demande. Les pièces en matériaux composites présentent aussi un bon comportement à la fatigue, une absence de corrosion et d'excellentes propriété spécifiques. Le gain de masse associé aux excellentes propriétés mécaniques des matériaux composites à fibres longues noyées dans une matrice de résine explique en particulier la percée de ces matériaux dans le domaine aéronautique.

De façon plus précise, la grande majorité des pièces en matériaux composites actuellement utilisées dans l'industrie aéronautique sont des pièces fabriquées à partir d'une résine thermodurcissable. En effet, ce type de résine était initialement le seul qui procurait les propriétés mécaniques recherchées.

La fabrication de pièces en matériaux composites à matrice thermodurcissable a cependant un inconvénient notable. En effet, du fait du caractère thermodurcissable de la résine utilisée, la fabrication de chaque pièce se termine nécessairement par une opération de polymérisation relativement longue, effectuée généralement en autoclave.

Dans le cas de pièces de petites dimensions, cette dernière opération n'est pas réellement pénalisante. En effet, des autoclaves de petites dimensions relativement peu coûteux peuvent être utilisés et plusieurs pièces peuvent êtres polymérisées simultanément dans chaque autoclave.

En revanche, lorsque la taille des pièces devient plus importante, une seule pièce à la fois peut être polymérisée dans un même autoclave et l'on doit avoir recours à des autoclaves de très grandes dimensions, particulièrement coûteux. La durée de l'opération et le coût de l'autoclave rendent alors rapidement le procédé mal adapté à une application industrielle. C'est pourquoi, même si les documents US-A-5 170 967 et US-A-5 223 067 envisagent la fabrication d'un tronçon de fuselage d'aéronef en matériau composite à matrice thermodurcissable, la fabrication de pièces de cette taille selon cette technologie reste difficilement justifiable du point de vue industriel.

Depuis l'apparition relativement récente de résines thermoplastiques telles que la résine PEEK (Polyétheréthercétone), permettant d'obtenir des matériaux composites à fibres longues et à matrice thermoplastique présentant des caractéristiques mécaniques équivalentes à celles des matériaux composites à matrice thermodurcissable les plus récents, on tend également à remplacer les pièces métalliques existantes par des pièces en matériau composite à matrice thermoplastique.

Ces matériaux composites à matrice thermoplastique présentent, outre les avantages des matériaux composites à matrice organique cités précédemment, une bonne tenue à l'impact et au feu ainsi qu'une faible reprise d'humidité. Enfin, les demi-produits se conservent à température ambiante et ont une durée de vie pratiquement illimitée, du fait que la résine qui imprègne les fils est déjà polymérisée.

Comme l'illustre notamment le document US-A- 5 362 347, on a déjà proposé de fabriquer le bord d'attaque d'une aile d'avion en matériau composite à matrice thermoplastique. Plus précisément, ce document envisage de fabriquer séparément les éléments de renfort et la peau, puis de les assembler par soudage/diffusion.

Du fait que les éléments de renfort et la peau sont fabriqués séparément avant d'être assemblés, la peau comme les éléments de renfort doivent subir des opérations de consolidation avant leur assemblage. Il est rappelé que ces opérations de consolidation ont principalement pour fonction la création de la liaison entre les différentes couches constituant, d'une part, la peau et, d'autre part, chacun des éléments de renfort, tout en éliminant les porosités. Elles consistent en l'application d'une pression sur l'élément à consolider, et son chauffage à une température déterminée, supérieure à la température de fusion de la résine. Ces opérations de consolidation s'effectuent en autoclave. Cela rend ce procédé mal adapté à la fabrication de pièces présentant une peau de grandes dimensions, pour des raisons identiques à celles qui ont été mentionnées dans le cadre de la fabrication de pièces en matériau composite à matrice thermodurcissable.

### Exposé de l'invention

L'invention a précisément pour objet un procédé permettant de fabriquer des pièces de grandes dimensions, telles que des tronçons de fuselage d'aéronefs, en un matériau composite à matrice thermoplastique, d'une manière particulièrement rapide et peu coûteuse, adaptée à une fabrication industrielle à cadence relativement élevée, sans réelle limitation de taille du fait que ni la peau, ni la structure finale obtenue ne doivent passer en autoclave à la fin de leur fabrication.

Conformément à l'invention, ce résultat est obtenu au moyen d'un procédé de fabrication de pièces en matériau composite, incluant une peau et des éléments de renfort, ce procédé comprenant les étapes suivantes :
- fabrication séparée des éléments de renfort, par drapage, consolidation et mise en forme, à partir d'une bande de fibres longues imprégnées de résine thermoplastique ;
- mise en place des éléments de renfort sur un outillage de forme complémentaire de la pièce à fabriquer ;
et étant caractérisé en ce qu'il comprend, de plus, une étape de fabrication de la peau et d'assemblage simultané de celle-ci et des éléments de renfort, par drapage et consolidation en continu d'au moins une bande de fibres longues imprégnées de résine thermoplastique, directement sur l'outillage portant les éléments de renfort, puis refroidissement de la bande qui vient d'être déposée, à une température inférieure à la température de fusion de la résine.

Du fait que les éléments de renfort et la peau sont assemblés lors de la fabrication de celle-ci et du fait que cette fabrication inclut la consolidation en continu d'une bande de fibres formant la peau, lors de son drapage, des pièces de dimensions quelconques peuvent être fabriquées, sans qu'il soit nécessaire de placer la peau ou la pièce obtenue dans un autoclave.

Par ailleurs, le temps de fabrication des pièces est particulièrement court puisque l'assemblage de la peau et des éléments de renfort et la fabrication de la peau sont simultanés. En outre, les éléments de renfort d'une pièce donnée peuvent être fabriqués lorsque la peau de la pièce précédente est elle-même en cours de fabrication.

Dans une forme de réalisation préférée de l'invention, les éléments de renfort sont fabriqués par dépose automatisée en continu d'une bande de fibres longues imprégnées de résine thermoplastique polymérisée, de façon à former un panneau, comparable à une tôle dans une pièce métallique classique, par découpe de flans dans ce panneau, puis par consolidation et mise en forme de ces flans.

Généralement les flans sont consolidés avant d'être mis en forme.

La consolidation des flans peut se faire soit en autoclave, soit sous presse chauffante. Il est à noter que la consolidation en autoclave ou sous presse chauffante concerne alors des pièces de relativement petites dimensions, de sorte qu'un autoclave ou une presse chauffante ordinaires, de dimensions conventionnelles peuvent être utilisés et que plusieurs flans peuvent y être consolidés simultanément.

Par ailleurs, les flans sont de préférence mis en forme par thermoformage. Si une bonne orientation des fibres dans l'élément de renfort le nécessite, le thermoformage peut être précédé d'une opération de cintrage.

Dans certains cas particuliers, et notamment lorsque les éléments de renfort présentent une courbure relativement limitée par rapport à un plan, les flans peuvent être consolidés et mis en forme simultanément par thermoformage dans une presse chauffante.

Le procédé selon l'invention est avantageusement appliqué à la fabrication d'une pièce creuse. On place alors les éléments de renfort dans des évidements prévus sur un mandrin appartenant à l'outillage, puis on drape et on consolide en continu la bande sur ce mandrin en le faisant tourner autour de son axe.

Dans le cas particulier où le procédé selon l'invention est appliqué à la fabrication de tronçons de fuselage d'aéronefs, on fabrique des éléments de renfort comprenant des lisses, des cadres et des renforts locaux.

### Brève description des dessins

On décrira à présent, à titre d'exemple non limitatif, une forme préférée de mise en oeuvre de l'invention en se référant aux dessins annexés, dans lesquels :
- la figure 1 illustre de façon schématique une première étape du procédé selon l'invention, au cours de laquelle des lisses, des renforts locaux et des cadres sont fabriqués séparément ;
- la figure 2 est une vue en coupe transversale qui représente schématiquement l'étape ultime du procédé selon l'invention, au cours de laquelle on effectue simultanément la fabrication de la peau et son assemblage aux éléments de renfort ; et
- la figure 3 est une vue en perspective illustrant l'agencement relatif des lisses et des cadres dans le tronçon de fuselage que l'on désire fabriquer.

### Description détaillée d'une forme préférée de mise en oeuvre

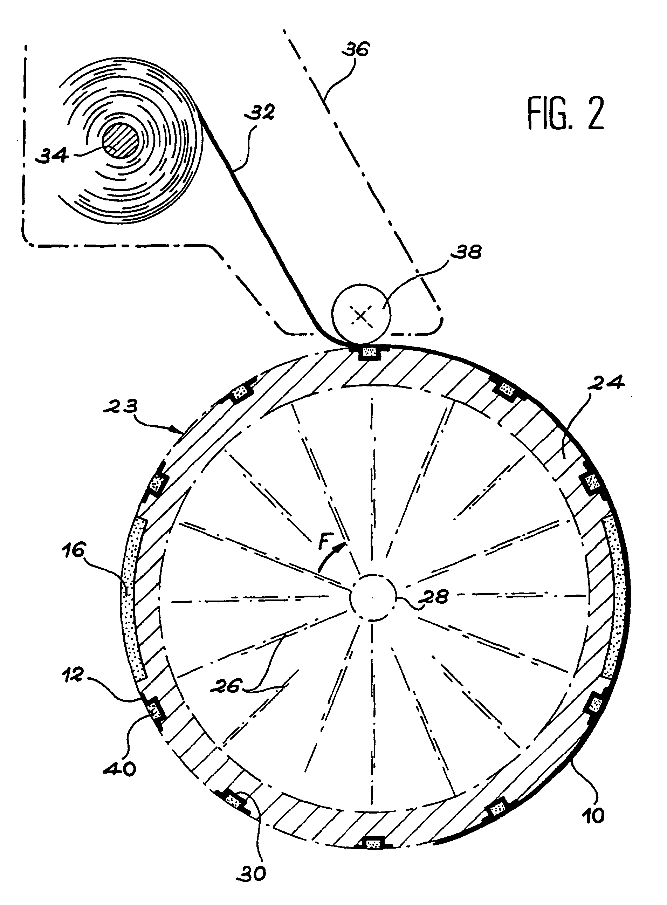

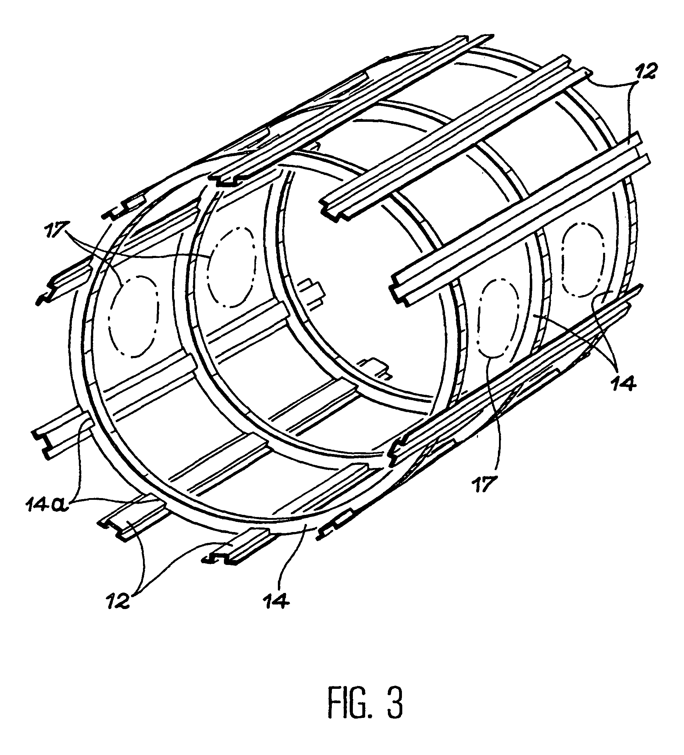

Le procédé conforme à l'invention va à présent être décrit dans son application à la fabrication d'un tronçon de fuselage d'aéronef. Comme le montrent notamment les figures 2 et 3, un tel tronçon de fuselage comprend une peau extérieure 10, ainsi que des éléments de renfort constitués par des lisses 12, des cadres 14 et des renforts locaux 16. Les lisses 12 et les cadres 14, orientés respectivement selon des directions longitudinales et circonférentielles, constituent l'ossature du fuselage (figure 3), de la même manière que lorsque celui-ci est métallique. Les renforts locaux 16 forment des surépaisseurs qui viennent s'ajouter localement à la peau 10 afin de la renforcer, notamment dans les régions où se trouvent les hublots 17 (figure 3).

Cette application ne doit cependant pas être considérée comme limitative. En effet, comme on l'a déjà observé, le procédé selon l'invention peut être utilisé pour fabriquer toutes pièces de grandes dimensions en matériau composite à matrice thermoplastique, formées par l'assemblage d'une peau et d'éléments de renfort. Par conséquent, la forme et les dimensions de la pièce peuvent être différentes, de même que la nature, le nombre et l'agencement des éléments de renfort. En particulier, si l'invention est particulièrement adaptée à la fabrication d'une pièce creuse de révolution, elle peut aussi s'appliquer à la fabrication de pièces de formes différentes, non de révolution.

Selon une première étape du procédé de fabrication conforme à l'invention, les éléments de renfort constitués ici par les lisses 12, les cadres 14 et les renforts locaux 16, sont fabriqués séparément par drapage, consolidation et mise en forme, à partir d'une bande 18 de fibres longues imprégnées de résine thermoplastique polymérisée.

Dans la pratique, on utilise généralement des fibres de carbone imprégnées de résine PEEK (polyétheréthercétone). Des fibres et/ou une résine thermoplastique de natures différentes peuvent toutefois être utilisées dans certaines applications, sans sortir du cadre de l'invention.

On utilise généralement une bande 18 formées de fibres unidirectionnelles liées entre elles par la résine thermoplastique polymérisée. En variante, une bande de fibres tissées, également imprégnées de résine polymérisée peut toutefois être utilisée dans certains cas. A température ambiante, la nappe 18 de fibres imprégnées de résine thermoplastique polymérisée est une bande souple et non adhésive, habituellement stockée sur un rouleau.

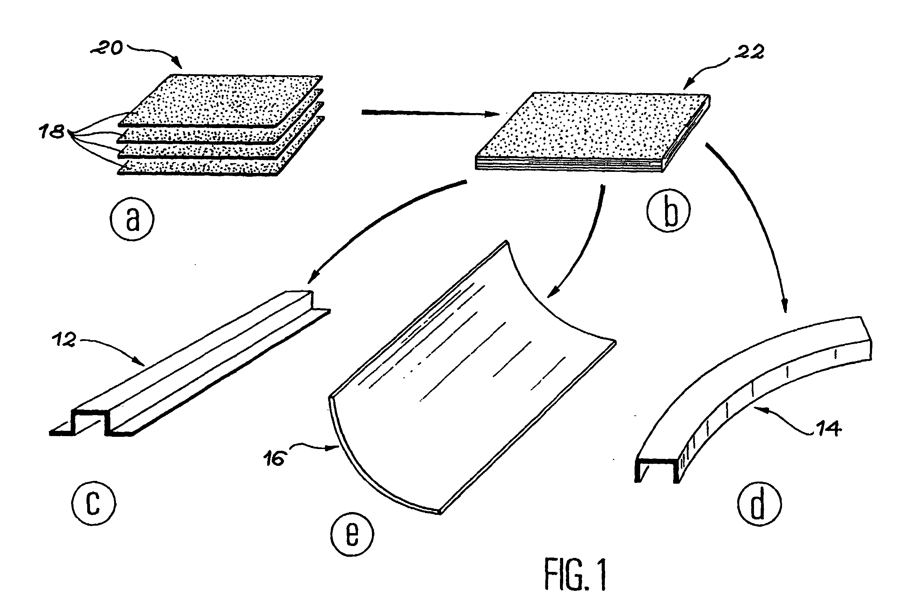

L'étape de drapage de la bande 18, illustrée schématiquement en a sur la figure 1, consiste à déposer la bande 18 sur plusieurs épaisseurs, pour former un certain nombre de couches ou de plis, selon des orientations qui peuvent ou non varier d'un pli à l'autre, pour tenir compte des caractéristiques mécaniques que l'on désire obtenir. Le nombre de plis superposés au cours de cette étape de drapage dépend également des caractéristiques mécaniques souhaitées pour les éléments de renfort 12, 14 et 16.

L'étape de drapage illustrée en a sur la figure 1 peut être commune à tous les éléments de renfort constitués par les lisses 12 les cadres 14 et les renforts locaux 16, ou au contraire spécifique à chacun de ces éléments de renfort, selon que ces éléments doivent présenter ou non la même épaisseur. La bande 18 peut également être la même pour tous les éléments de renfort, ou différer pour certains d'entre eux.

Selon le cas, on fabrique ainsi par drapage un ou plusieurs types de panneaux plans 20.

L'opération de drapage de la bande 18, à partir du rouleau (non représenté) sur lequel le matériau est bobiné, est de préférence assurée par une tête de drapage (non représentée) adaptée au drapage d'une bande formée de fibres longues imprégnées de résine thermoplastique polymérisée. A cet effet, on utilisera avantageusement la tête de drapage à grande vitesse décrite dans la demande de brevet français n° 96 14799.

La tête de drapage assure le chauffage de la bande 18 à une température supérieure à la température de fusion de la résine, puis l'application d'une pression sur la bande déposée, afin d'assurer son soudage par diffusion sur la bande déposée précédemment. La tête de drapage assure ensuite le refroidissement de la bande immédiatement après son application, afin d'éviter son redécollement. En outre, des moyens peuvent être prévus pour assurer un positionnement précis des bandes entre elles.

La bande 18 est déposée par la tête de drapage sur un support plan, généralement fixe. Le ou les panneaux 20 obtenus par cette opération de drapage sont donc des panneaux plans, de préférence de grandes dimensions, qui peuvent être fabriqués en continu dans le cadre d'un procédé industriel.

Des flans 22 sont découpés dans le ou les panneaux 20, soit au fur et à mesure que ces panneaux sont fabriqués, soit ultérieurement. Les découpes sont faites afin d'obtenir des flans dont les dimensions sont adaptées à celles des éléments de renfort 12, 14 et 16 que l'on désire fabriquer. Ces dimensions peuvent aussi être légèrement supérieures s'il est nécessaire d'effectuer un détourage après la mise en forme des éléments de renfort.

Comme on l'a illustré schématiquement en b sur la figure 1, les flans 22 découpés dans le ou les panneaux 20 subissent généralement ensuite une opération de consolidation qui a principalement pour fonctions d'éliminer les porosités à l'intérieur du matériau et d'améliorer la liaison entre les différentes couches qui le constituent.

Cette opération de consolidation se caractérise par l'application d'une pression sur les flans 22 (généralement comprise entre 2 à 20 bars, selon le type de matériau utilisé), et par leur chauffage à une température généralement supérieure à la température de fusion de la résine, afin d'assurer son ramollissement (par exemple, à environ 400°C dans le cas d'une résine PEEK).

La consolidation des flans 22 peut être effectuée en autoclave ou dans une presse chauffante.

Lorsque la consolidation est effectuée en autoclave, il est à noter que les autoclaves utilisés sont des autoclaves classiques, de dimensions conventionnelles, puisque les dimensions des flans 22 à consolider correspondent aux dimensions des éléments de renfort de la pièce à fabriquer, avant que ces éléments soient mis en forme. Généralement, plusieurs flans 22 peuvent être consolidés dans un même autoclave, ce qui procure un gain de temps et une économie notables.

En variante, la consolidation des flans 22 peut aussi être faite dans une presse chauffante telle que celle qui est décrite dans le document EP-A-0 584 017.

Les différents flans 22 consolidés sont ensuite mis en forme séparément, comme on l'a illustré schématiquement en c, d et e respectivement pour les lisses 12, les cadres 14 et les renforts locaux 16.

Comme on l'a illustré schématiquement en c sur la figure 1, les lisses 12 sont des profilés rectilignes ou sensiblement rectilignes, qui présentent approximativement en section une forme en oméga. Des profilés rectilignes de sections sensiblement différentes, par exemple en L, Z ou U, peuvent être fabriqués de la même manière, en vue d'être intégrés dans la pièce finale.

La mise en forme des éléments de renfort tels que les lisses 12 est faite par thermoformage, par exemple dans une machine de type presse chauffante équipée d'un poinçon et d'une matrice, ou d'un poinçon et d'une vessie. Les techniques de mise en forme par thermoformage de pièces en matériau composite à matrice thermoplastique sont bien connues, de sorte qu'aucune description détaillée n'en sera faite.

Comme on l'a illustré schématiquement en d sur la figure 1, les éléments de renfort tels que les renforts locaux 16, constitués par des tronçons de panneaux légèrement incurvés par rapport à un plan, peuvent être également fabriqués par thermoformage, notamment entre un poinçon et une vessie, à partir de flans plans 22 précédemment consolidés. La mise en forme peut notamment être faite dans une presse chauffante analogue à celle qui est décrite dans le document EP-A-0 584 017, déjà cité.

Compte tenu de la faible courbure des renforts locaux 16, les étapes de consolidation et de mise en forme de ces éléments de renfort peuvent aussi être simultanées. Les flans plans 22 découpés dans le panneau 20 sont alors placés directement dans une presse chauffante qui assure simultanément ces deux fonctions. Là encore, une presse chauffante analogue à celle qui est décrite dans le document EP-A-0 584 017 peut être utilisée.

Comme on l'a illustré schématiquement en e sur la figure 1, les éléments de renfort tels que les cadres 14 sont des profilés circulaires ou en arc de cercle. Dans la forme de réalisation représentée, ces profilés présentent une section en U. Toute autre section, par exemple en forme de L, peut toutefois être envisagée, sans sortir du cadre de l'invention.

Afin de permettre l'obtention d'un élément circulaire à partir d'un flan plan 22 initialement en forme de bande droite, ce flan doit tout d'abord être cintré dans son plan, pour assurer la continuité des fibres sur toute la circonférence de l'élément. Ce cintrage peut notamment être effectué à l'aide d'un appareil comparable à celui qui est décrit dans le document FR-A-2 635 484, après adaptation de cet appareil pour tenir compte du caractère thermoplastique de la résine utilisée. Cette adaptation se traduit notamment par l'ajout de moyens de chauffage, en amont des rouleaux coniques assurant le cintrage de la bande.

Lorsque le flan 22 en forme de bande a été cintré dans son plan, ce flan est mis en forme par thermoformage, soit entre un poinçon et une matrice soit entre un poinçon et une vessie, de la même manière que les lisses 12 dont la mise en forme a été décrite précédemment.

Il est important d'observer que les différentes opérations de drapage, consolidation et mise en forme, constituant la première étape de fabrication des éléments de renfort 12, 14 et 16 qui vient d'être décrite, peuvent être réalisées simultanément dans le cadre d'un processus de fabrication en série des tronçons de fuselage.

Lorsque les lisses 12, les renforts locaux 16 et les cadres 14 nécessaires à la fabrication d'un tronçon de fuselage sont disponibles, tous ces éléments de renfort sont mis en place sur un outillage 23, comme on l'a illustré schématiquement sur la figure 2.

De façon plus précise, l'outillage 23 comprend un mandrin creux 24, par exemple métallique, dont la surface extérieure présente une forme complémentaire de celle de la surface inférieure de la peau 10 du tronçon de fuselage que l'on désire fabriquer. Pour simplifier, un mandrin 24 de forme circulaire a été représenté sur la figure 2.

Comme on l'a illustré de façon très schématique, le mandrin creux 24 est monté sur des rayons 26, permettant de le relier à un moyeu central 28, par lequel le mandrin peut être entraîné en rotation dans le sens de la flèche F sur la figure 2. Cet entraînement en rotation peut être assuré par tout moyen approprié permettant une rotation du mandrin 24 à une vitesse constante contrôlée, relativement lente.

Sur sa surface extérieure, le mandrin 24 comporte des évidements 30 dont les formes sont complémentaires de celles des différents éléments de renfort 12, 14 et 16. Ainsi, lorsque les lisses 12, les cadres 14 et les renforts locaux 16 sont placés dans ces évidements 30, tous ces éléments de renfort affleurent la surface extérieure du mandrin 24 entre les évidements 30.

Comme l'illustre schématiquement la figure 3, le montage des lisses 12 et des cadres 14 entrecroisés est rendu possible par le fait que des entailles 14a sont formées, par exemple dans les cadres 14, aux endroits où ces éléments de renfort se croisent. Les entailles 14a sont formées avant la mise en place des lisses 12 et des cadres 14 dans les évidements 30.

Le maintien des éléments de renfort dans les évidements 30 peut être assuré par tout moyen approprié tel qu'un ruban adhésif double face, des points de colle, ou par aspiration, etc. permettant ensuite un démontage aisé. Pour permettre ce démontage, le mandrin 24 est lui-même démontable. A cet effet, il peut être formé de plusieurs secteurs démontables assemblés entre eux, ou apte à être rétracté sur lui-même, ou encore de toute autre manière permettant un démontage aisé de la pièce lorsqu'elle est terminée.

Comme on l'a représenté sur la figure 2, certains des éléments de renfort (dans ce cas, les lisses 12) présentent des parties en creux tournées vers l'extérieur, lorsque ces éléments sont placés dans les évidements 30. De préférence, on place dans ces parties en creux des noyaux 40 qui évitent toute déformation de la peau 10, lorsque celle-ci est fabriquée. Selon des techniques analogues à celles qui sont utilisées pour le moulage, on utilise des noyaux 40 en un matériau apte à être aisément détruit ou démonté lorsque la pièce est terminée (par exemple des noyaux solubles).

Lorsque tous les éléments de renfort entrant dans la composition d'un tronçon de fuselage ont été mis en place dans les évidements 30, l'étape suivante du procédé peut être entamée comme l'illustre la figure 2. Au cours de cette étape, on effectue simultanément la fabrication de la peau 10 et l'assemblage de cette peau et des éléments de renfort 12, 14 et 16, par drapage et consolidation en continu d'une bande 32 de fibres longues imprégnées de résine thermoplastique polymérisée, directement sur le mandrin 24 portant ces éléments de renfort.

La bande 32 de fibres longues imprégnées de résine est généralement de même nature que celle qui a servi à la fabrication des lisses 12, des cadres 14 et des renforts locaux 16. Ainsi, il s'agit généralement d'une bande de fibres de carbone imprégnées de résine PEEK (polyétheréthercétone) déjà polymérisée. Toutefois, il est à noter que dans certaines applications particulières, le matériau composite formant la peau 10 peut être différent de celui dans lequel sont réalisés les éléments de renfort.

Comme on l'a illustré schématiquement sur la figure 2, l'opération de drapage et de consolidation en continu s'effectue à partir d'une bande 32 initialement enroulée sur une bobine 34. Le drapage et la consolidation en continu sont assurés par une tête de drapage illustrée schématiquement en 36. Cette tête de drapage 36 est montée sur un support (non représenté) de façon à se déplacer progressivement parallèlement à l'axe du mandrin 24. Lorsque celui-ci est entraîné en rotation dans le sens de la flèche F, la bande 32 est enroulée en hélice autour du mandrin, selon une séquence du drapage définie de façon à former progressivement la peau 10 de la pièce. La bande 32 peut également être déposée parallèlement à l'axe du mandrin 24.

Il est à noter que tout autre mouvement relatif entre la tête de drapage 36 et le mandrin 24 permettant de former la peau 10 pourrait être utilisé, sans sortir du cadre de l'invention.

La tête de drapage 36 est conçue pour réaliser simultanément le drapage de la bande 32 sur la mandrin 24, la consolidation en continu de la peau 10 ainsi fabriquée, et l'assemblage de cette peau 10 et des éléments de renfort constitués par les lisses 12, les cadres 14 et les renforts locaux 16. A cet effet, la tête de drapage 36 soumet le matériau à un cycle de pression et de température prédéterminé. Ce cycle comprend le chauffage de la bande 32 immédiatement avant son application sur le mandrin 24, l'application d'une pression sur la bande 32 lorsqu'elle est appliquée sur le mandrin, puis le refroidissement de la bande qui vient être déposée.

Le chauffage préalable de la bande 32 est effectué à une température supérieure à la température de fusion de la résine, afin de rendre celle-ci suffisamment fluide pour permettre le soudage par diffusion entre les différentes couches déposées et pour faciliter l'élimination des porosités. A titre d'illustration nullement limitative, une température voisine de 400°C peut être adoptée dans le cas d'une résine PEEK.

La bande 32 est appliquée contre le mandrin 24, par exemple par un rouleau 38, a une pression généralement comprise entre 2 et 20 bars, selon le type de matériau utilisé.

Le refroidissement ultérieur de la bande déposée est destiné à éviter le redécollement de cette bande. Il vise à ramener celle-ci a une température inférieure à la température de fusion de la résine et, si possible, inférieure à sa température de transition vitreuse.

Lorsque le nombre de couches désiré pour la peau 10 est obtenu, la rotation du mandrin 24 est stoppée et la bande 32 est coupée. La peau 10 est alors déjà consolidée et soudée par diffusion aux éléments de renfort constitués dans ce cas par les lisses 12, les cadres 14 et les renforts locaux 16.

Par conséquent, le tronçon de fuselage est obtenu immédiatement, après démontage ou rétraction du mandrin 24 et enlèvement des noyaux 40 placés à l'intérieur des lisses 12. En particulier, le tronçon de fuselage ainsi obtenu ne nécessite pas de passage ultérieur en autoclave.

Dans une extension du procédé selon l'invention, le bâti (non représenté) qui supporte le mandrin 24 et la tête de drapage 36 peut également être utilisé, si nécessaire, pour intégrer à la peau de la structure obtenue une protection contre la foudre et pour assurer au moins en partie des opérations de finition telles que le dépôt d'un revêtement primaire destiné à recevoir une peinture.

La description qui précède fait apparaître que le procédé selon l'invention permet de fabriquer, de manière industrielle et à moindre coût, des pièces en matériau composite à matrice thermoplastique de grandes dimensions, formées par l'assemblage d'une peau et d'éléments de renfort, pratiquement sans limitation de taille. Un grand nombre de pièces habituellement métalliques peuvent ainsi être fabriquées en matériau composite, ce qui permet de bénéficier des avantages propres à ces matériaux.

Il est à noter que le procédé selon l'invention n'interdit pas l'ajout ultérieur de certains éléments de renfort ou autres en matériaux différents et notamment métalliques, lorsque la fabrication de ces éléments n'est pas possible ou trop coûteuse par les techniques de fabrication des matériaux composites à matrice thermoplastique.

## Revendications

1. Procédé de fabrication de pièces en matériau composite, incluant une peau (10) et des éléments de renfort (12,14,16), ce procédé comprenant les étapes suivantes :
- fabrication séparée des éléments de renfort (12,14, 16), par drapage, consolidation et mise en forme, à partir d'une bande (18) de fibres longues imprégnées de résine thermoplastique ;
- mise en place des éléments de renfort (12,14,16) sur un outillage (23) de forme complémentaire de la pièce à fabriquer ;
et étant **caractérisé en ce qu'**il comprend, de plus, une étape de fabrication de la peau (10) et d'assemblage simultané de celle-ci et des éléments de renfort (12, 14,16), par drapage et consolidation en continu d'au moins une bande (32) de fibres longues imprégnées de résine thermoplastique, directement sur l'outillage (23) portant les éléments de renfort (12,14,16), puis refroidissement de la bande qui vient d'être déposée, à une température inférieure à la température de fusion de la résine.

2. Procédé selon la revendication 1, dans lequel les éléments de renfort (12,14,16) sont fabriqués par dépose automatisée en continu d'une bande (18) de fibres longues imprégnées de résine thermoplastique, de façon à former un panneau (20), par découpe de flans (22) dans ce panneau, puis par consolidation et mise en forme de ces flans (22).

3. Procédé selon la revendication 2, dans lequel les flans (22) sont consolidés avant d'être mis en forme.

4. Procédé selon l'une quelconque des revendications 2 et 3, dans lequel les flans (22) sont consolidés en autoclave, ou sous presse chauffante.

5. Procédé selon l'une quelconque des revendications 2 à 4, dans lequel les flans (22) sont mis en forme par thermoformage.

6. Procédé selon la revendication 5, dans lequel des flans (22) sont cintrés avant d'être mis en forme par thermoformage.

7. Procédé selon la revendication 2, dans lequel les flans (22) sont consolidés et mis en forme simultanément par thermoformage, sous presse chauffante.

8. Procédé selon l'une quelconque des revendications précédentes, appliqué à la fabrication d'une pièce creuse, dans lequel on place les éléments de renfort (12,14,16) dans des évidements prévus sur un mandrin (23) de l'outillage (24), puis on drape et on consolide en continu ladite bande (32) sur ce mandrin en faisant tourner celui-ci autour de son axe.

9. Procédé selon la revendication 8, appliqué à la fabrication de tronçons de fuselage d'aéronefs, dans lequel on fabrique des éléments de renfort comprenant des lisses (12), des cadres (14) et des renforts locaux (16).

10. Procédé selon l'une quelconque des revendications précédentes, dans lequel on intègre ensuite à la peau (10) une protection contre la foudre.

## Patentansprüche

1. Verfahren zur Herstellung von Verbundmaterialteilen mit einer Haut (10) und Verstärkungselementen (12, 14, 16), wobei dieses Verfahren die folgenden Schritte umfasst:
Getrennte Herstellung der Verstärkungselemente (12, 14, 16) durch Drapierung, Verfestigung und Formgebung, ausgehend von einem Band (18) langer Fasern, die mit thermoplastischem Harz getränkt sind,
Anbringung der Verstärkungselemente (12, 14, 16) auf einem Formwerkzeug (23) von zu dem herzustellenden Teil komplementärer Form, und
**dadurch gekennzeichnet, dass** es außerdem einen Schritt der Herstellung der Haut (10) und des gleichzeitigen Zusammenbaus derselben und der Verstärkungselemente (12, 14, 16) durch kontinuierliches Drapieren und Verfestigen mindestens eines Bandes (32) langer Fasern, die mit thermoplastischem Harz getränkt sind, direkt auf dem die Verstärkungselemente (12, 14, 16) tragenden Formwerkzeug (23), und anschließendes Abkühlen des gerade aufgebrachten Bandes auf eine Temperatur unter der Schmelztemperatur des Harzes umfasst.

2. Verfahren nach Anspruch 1, wobei die Verstärkungselemente (12, 14, 16) durch automatisches, kontinuierliches Ablegen eines Bandes (18) aus langen, mit thermoplastischem Harz getränkten Fasern derart, dass eine Platte (20) gebildet wird, durch Zuschneiden von Weichplattenteilen (22) in dieser Platte und durch anschließendes Verfestigen und Formen dieser Weichplattenteile (22) hergestellt werden.

3. Verfahren nach Anspruch 2, wobei die Weichplattenteile (22) vor der Formgebung verfestigt werden.

4. Verfahren nach einem der Ansprüche 2 und 3, wobei die Weichplattenteile (22) im Autoklaven oder unter einer Warmpresse verfestigt werden.

5. Verfahren nach einem der Ansprüche 2 bis 4, wobei die Weichplattenteile (22) durch Warmformen geformt werden.

6. Verfahren nach Anspruch 5, wobei die Weichplattenteile (22) gewölbt werden, bevor sie durch Warmformen geformt werden.

7. Verfahren nach Anspruch 2, wobei die Weichplattenteile (22) durch Warmformen unter einer Warmpresse gleichzeitig verfestigt und geformt werden.

8. Verfahren nach einem der vorangehenden Ansprüche, angewandt auf die Herstellung eines Hohlteils, wobei die Verstärkungselemente (12, 14, 16) in an einer Spindel (23) des Formwerkzeugs (24) vorgesehenen Ausnehmungen angeordnet werden, und anschließend das Band (32) kontinuierlich an dieser Spindel drapiert und verfestigt wird, indem diese um ihre Achse gedreht wird.

9. Verfahren nach Anspruch 8, angewandt auf die Herstellung von Rumpfteilen von Luftfahrzeugen, wobei Verstärkungselemente, die Streben (12), Rahmenteile (14) und lokale Verstärkungen (16)umfassen, hergestellt werden.

10. Verfahren nach einem der vorangehenden Ansprüche, wobei anschließend in die Haut (10) ein Blitzschutz integriert wird.

## Claims

1. Fabrication process for parts with large dimensions, from a composite material comprising a skin (10) and stiffeners (12, 14, 16), said process comprising the following steps:
- separate fabrication of stiffeners (12, 14, 16) by lay-up, consolidation and shaping, starting from a strip (18) of long fibers impregnated with thermoplastic resin;
- placement of stiffeners (12, 14, 16) on a tooling (23) with a shape complementary to the shape of the part to be fabricated; and
**characterized in that** it also comprises the fabrication of the skin (10) and simultaneous assembly of the skin and the stiffeners (12, 14, 16), by lay-up and continuous consolidation of at least one strip (32) of long fibers impregnated with thermoplastic resin, directly on the tooling (23) on which the stiffeners (12, 14, 16) are placed, followed by the cooling of the deposited strip to a temperature below the melting point of the resin.

2. Process according to claim 1, in which the stiffeners (12, 14, 16) are made by continuously and automatically depositing a strip (18) of long fibers impregnated with polymerized thermoplastic resin in order to form a panel (29), by cutting blanks (22) out of this panel, and then by consolidation and shaping of these blanks (22).

3. Process according to claim 2, in which the blanks (22) are consolidated before they are shaped.

4. Process according to either of claims 2 or 3, in which the blanks (22) are consolidated in an autoclave or in a heating press.

5. Process according to any one of claims 2 to 4, in which the blanks (22) are shaped by thermoforming.

6. Process according to claim 5, in which the blanks (22) are bent before they are shaped by thermoforming.

7. Process according to claim 2, in which the blanks (22) are consolidated and shaped simultaneously by thermoforming, in a heating press.

8. Process according to any one of the previous claims applied to the fabrication of a hollow part, in which the stiffeners (12, 14, 16) are placed in recesses formed on a mandrel (23) forming part of the tooling (24), and in which the lay-up is then done and the strip (32) is continuously consolidated on this mandrel by rotating the mandrel around its axis.

9. Process according to claim 8, applied to the fabrication of aircraft fuselage segments, in which stiffeners comprising rails (12), frames (14) and local stiffeners (16) are fabricated.

10. Process according to any one of the previous claims, in which lightning protection is then integrated into the skin (10).
